Europäisches Patentamt

European Patent Office

Office européen des brevets

(11) Publication number: **0 190 932**
A1

# (12) EUROPEAN PATENT APPLICATION

(21) Application number: 86300798.5

(22) Date of filing: 06.02.86

(51) Int. Cl.⁴: **A 01 K 95/00**

(30) Priority: 07.02.85 GB 8503171
25.04.85 GB 8510519
07.02.85 GB 8503170

(43) Date of publication of application:
13.08.86 Bulletin 86/33

(84) Designated Contracting States:
AT BE CH DE FR GB IT LI LU NL SE

(71) Applicant: C.K. TACKLE LIMITED
162, Old Lodge Lane Purley
Surrey, CR2 4AL(GB)

(72) Inventor: Keightley, Ross
162 Old Lodge Lane Purley
Surrey CR2 4AL(GB)

(72) Inventor: Austin, Brian Richard
32, Granby Park Road Cheshunt
Waltham Cross Hertfordshire(GB)

(72) Inventor: Hart, Gerry
20, Spruce Hills Road
London E17 4LD(GB)

(74) Representative: Halstead, John Miles
54 Pine Walk
Carshalton Beeches, Surrey SM5 4HD(GB)

(54) Fishing Weight.

(57) A fishing weight has two body parts made of a resiliently deformably material, a first of those body parts including two gripper portions which define between them a channel into which a fishing line can be engaged, the other body part having an opening enabling it to be forced over the two gripper portions, with resilient deformation thereof, to cause them to grip the line. In one form, the two gripper portions extend from the first body part to constitute a coupling member connecting the two body parts, and in another form, the first body part is received in the opening of the second body part.

FIG.1

Croydon Printing Company Ltd.

"Fishing weight"

This invention relates to a weight for engagement onto an angler's fishing line.

The object of the invention is to provide an improved weight which grips the line firmly as a result of resilient deformation when two parts of the weight are assembled together.

According to the present invention a fishing weight comprises two body parts made of a resiliently deformable material, a first of said body parts including two portions which define between them a channel open at one end to receive a fishing line therein, the second of said body parts having an opening of a shape and size enabling it to be forced over said two gripper portions with resilient deformation thereof to grip the line.

The channel may taper in the direction away from its open end, or in another form the channel, in the unconstrained condition of the two gripper portions, may be substantially parallel-sided, and for use with a given diameter of line the width of the channel is advantageously less than the width of the line, such that forcing of the line into the channel causes spreading apart of the two gripper portions.

Preferably the length of the channel is such that, when the weight is in position engaged on the line, the line is substantially centrally situated in the weight.

At least one, and preferably both, of said gripper portions may be chamfered adjacent the free end to facilitate entry of the line into the channel.

In a first preferred form, the two gripper portions extend on said first body part to form a coupling means between the two body parts, whereas in a second preferred form the first body part is received in the opening of the second body part.

The weight as a whole has a density greater than that of water, and advantageously is made of a plastics material loaded with a particulate material of greater weight per unit volume.

. Embodiments of fishing weight in accordance with the invention are hereinafter particularly described by way of example with reference to the figures of the accompanying drawings, wherein:

Figure 1 is an elevation of a first embodiment of weight, showing two body parts prior to assembly radially onto a fishing line;

Figure 2 is an elevation showing a first body part in the course of being engaged with a line;

Figure 3 is an elevation of the weight assembled and engaged onto the line;

Figure 4 is a perspective elevation of a second embodiment of weight, showing two body parts prior to assembly radially onto a fishing line;

Figure 5 is an end elevation of the first body part of figure 4 engaged with a line;

Figure 6 is an elevation of the second embodiment of weight assembled and engaged onto the line;

Figure 7 is an elevation of a third embodiment, seen in open condition;

Figure 8 is an elevation of the third embodiment seen closed onto a line;

Figure 9 is an elevation of a fourth embodiment, seen in open condition;

Figure 10 is an elevation of part of the fourth embodiment, showing engagement of a line therein;

Figure 11 is an elevation of the fourth embodiment seen in closed condition;

Figure 12 is an elevation of a fifth embodiment, showing two portions prior to engagement on a line;

Figure 13 shows the fifth embodiment engaged on a line;

Figure 14 is an elevation of a sixth embodiment, showing two portions prior to engagement on a line;

Figure 15 is an elevation of the sixth embodiment seen engaged on a line.

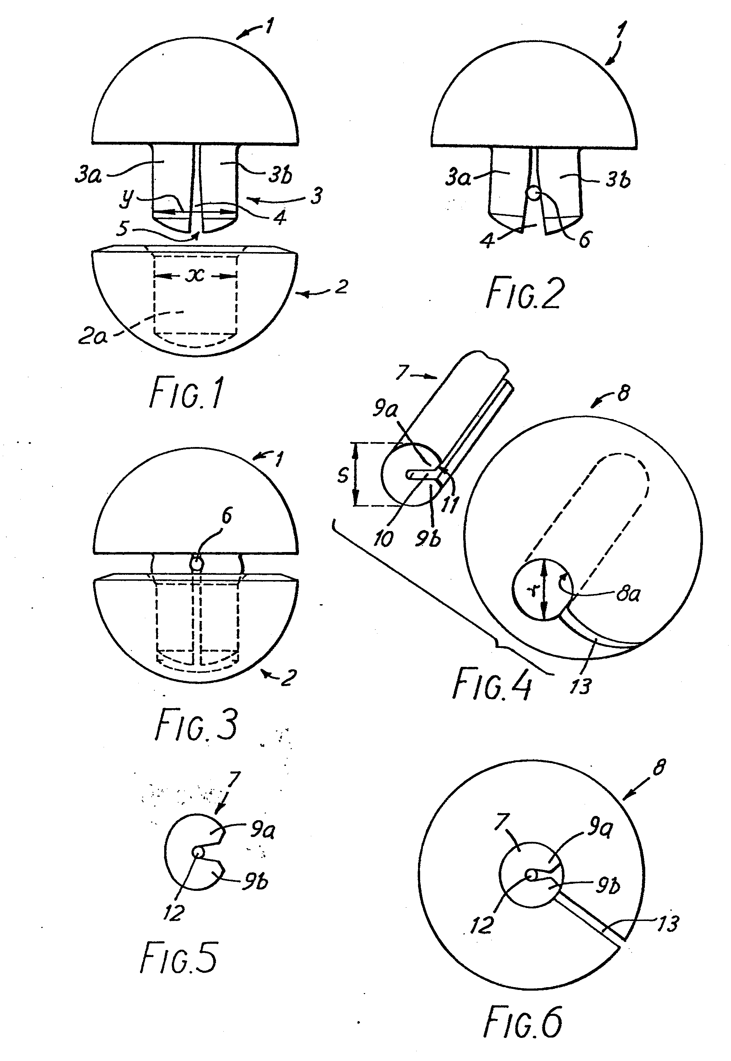

Referring to figures 1-3, the weight comprises a first body part 1 and a second body part 2, which could each be part-spherical, or could be elongated e.g. part-cylindrical. The body part 1 includes a gripper member 3 extending thereon to form a coupling between the two body parts, said gripper member 3 having two gripper portions 3a,3b which, when unconstrained, define between them a channel 4. As illustrated, the channel 4 is partially parallel-sided, as at 4a, and partially tapered, but it could alternatively be parallel-sided along its whole length. Each gripper portion may be chamfered adjacent its free end at 5 to facilitate entry of a line into the channel 4. The narrowest part of the channel 4, e.g. at 4a, could be as small as 2 thousandths of an inch (·025 mm.) wide, i.e. less than the width of the smallest line to be used with the weight.

Figure 2 shows the body part 1 with a fishing line 6 forced into the channel 4 and resulting in spreading apart of the gripper portions 3a,3b. The body parts 1 and 2 as a whole consist of a resiliently deformable material, so that when the line 6 is forced into the channel 4, it is gripped between the gripper portions 3a,3b, which are resiliently deformed.

The other body part 2 has an opening 2a the width $x$ of which is very slightly less than the maximum width $y$ of the unconstrained gripper member 3. After the line 6 has been forced into the channel 4, the body part 2 is pressed onto the gripper portions 3a,3b, as seen in figure 3, resulting in forcing together of the gripper portions 3a,3b such that the line 6 is even more firmly gripped between them, and remains spaced from the diametral faces of body parts 1 and 2, which do not need any recess to accommodate the line. The depth of opening 2a may be made less than the length of gripper member 3 so that the diametral faces cannot meet.

Referring now to figures 4-6, the second embodiment of weight comprises a first body part 7 and a second body part 8. Part 8 is shown as being spherical, but it could be elongated, e.g. spherical.

Body part 7 includes two gripper portions $9\underline{a}, 9\underline{b}$ which, when unconstrained, define between them a parallel-sided channel 10 suitably dimensioned to receive a fishing line. Each portion $9\underline{a}, 9\underline{b}$ is chamfered at its free edge at 11 to facilitate entry of a line into channel 10.

Figure 5 shows the body part 7 with a fishing line 12 forced into the channel 10 to a substantially axial position, resulting in a spreading apart of the gripper portions $9\underline{a}, 9\underline{b}$. The body parts 7 and 8 as a whole consist of a resiliently deformable material, so that when the line 12 is forced into the channel 10, it is gripped between the gripper portions $9\underline{a}, 9\underline{b}$.

The other body part 8 has an opening $8\underline{a}$ the width $\underline{r}$ of which is substantially the same as the width $\underline{s}$ of the unconstrained body part 7. After the line 12 has been forced into the channel 10, the body part 8 is pushed axially onto the body part 7 such that the latter is received in the opening $8\underline{a}$, resulting in forcing towards each other of the gripper portions $9\underline{a}, 9\underline{b}$ so that the line 12 is even more firmly gripped between them.

The body part 8 has a radial slot 13 to permit passage of the line 12, so that the body part 8 can be, like the body part 7, engaged radially onto the line.

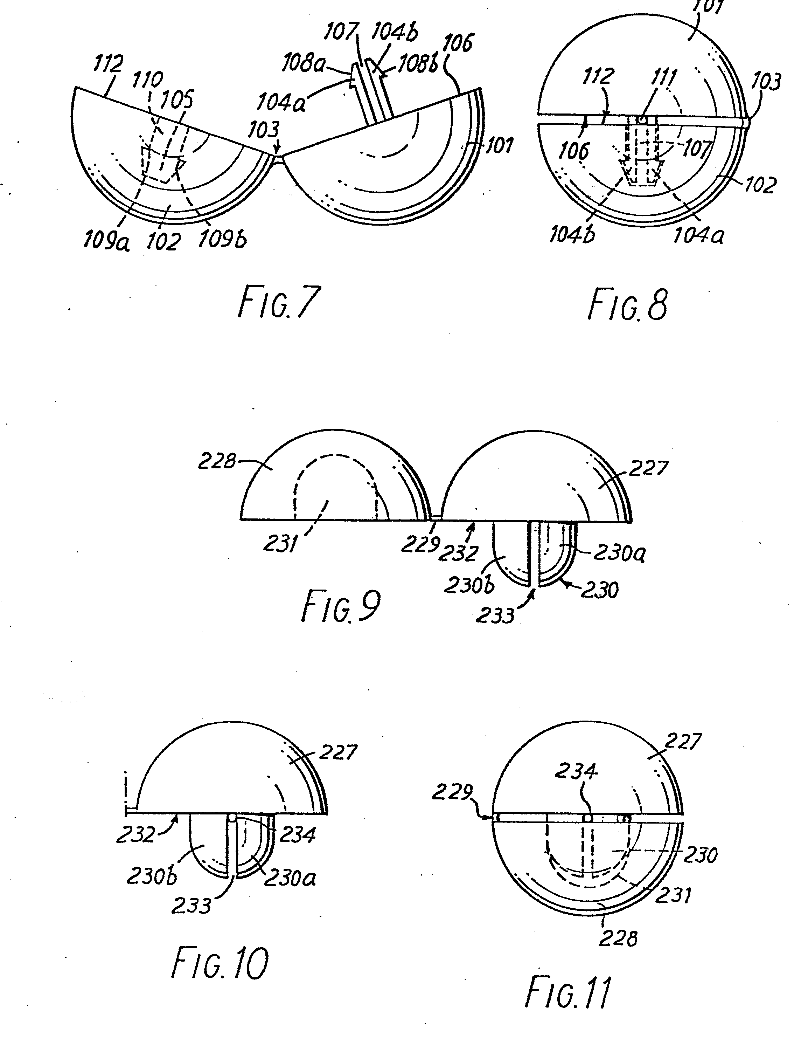

Referring to figures 7 and 8, the fishing weight comprises a first portion 101 and a second portion 102 which are connected by a flexible hinge tongue 103.

The portions 101 and 102 could be hemi-spherical or hemi-cylindrical or any other shape capable of coacting in the manner described herein, and they need not necessarily be substantially equal half portions of the whole.

The tongue 103 may be an integral part of one or both of the portions, or may be secured to one or both portions in any convenient manner. In a preferred arrangement, the portions 101 and 102 and the tongue 103 are all integral and are made of a material having the flexibility needed.

On the portion 101 there is provided a latching tenon 104 adapted to engage into a latching recess 105 in the portion 102. The latching tenon 104 comprises two legs 104a,104b which project from a gripping surface 106. Between the legs 104a,104b there is defined a channel 107 extending up to, as shown, or near to, the gripping surface 106. On each of the legs 104a,104b there is formed a latching tooth 108. In the portion 102, the latching recess 105 is formed with shoulders 109a,109b bounding a passage 110. The width of the passage 110 is such that, when the two portions 101 and 102 are moved into engagement about their tongue 103, the latching tenon 104 as a whole can enter the recess 105 and, when the legs 104a,104b have entered sufficiently far into the recess 105, the teeth 108a, 108b can engage each with a respective shoulder 109a,109b to retain the two portions 101 and 102 latched together in the closed condition seen in figure 8.

The latching tenon 104 and/or the material of the portion
102 bounding the recess 105, are made of resiliently
deformable material, such that the teeth 108a,108b can
snap into engagement each over the respective shoulder
109a,109b, and give a "snap-locking" action. The
resilient engagement may be such that the two portions
101 and 102 thereby become locked permanently with each
other and cannot subsequently be opened or separated,
short of destruction of the interengaging latch means,
but it is preferred if the resilient engagement is such
that the two portions 101 and 102 may be subsequently
re-opened and re-closed a number of times, by application
of adequate force.

For engagement of the weight onto a fishing line, the
line 111 is seated into the channel 107, with the two
portions 101 and 102 in the open condition of figure 1.
Then the two portions are closed together and latched,
whereby the line becomes trapped between the gripping
surface 106 of portion 101 and a gripping surface 112
of portion 102. To enhance the grip of the weight on
the line 111, one or both of the gripping surfaces 105
and 112 may be serrated, toothed or otherwise provided
with a relief formation. Where the line 111 is gripped
between the end face of the channel 107 and the face 112
that end face may likewise be provided with a relief
formation to enhance grip.

In a modification, the width of the channel 107 is made
so small that the line 111 may be gripped solely between
the two legs 104a,104b, and the depth of the recess 105
may be made less than the length of the tenon 104, such
that the diametral faces of the two portions 101 and
102 do not meet nor grip the line individually or
jointly.

- 8 -

0190932

In figures 9 –11, the fishing weight comprises a first body portion 227 and a second body portion 228 which are connected by a flexible or resiliently bendable hinge tongue 229. The portions 227 and 228 could be hemi-spherical (as shown) or hemi-cylindrical or of any other shape capable of acting in the manner described herein, and need not be equal half portions of the whole body.

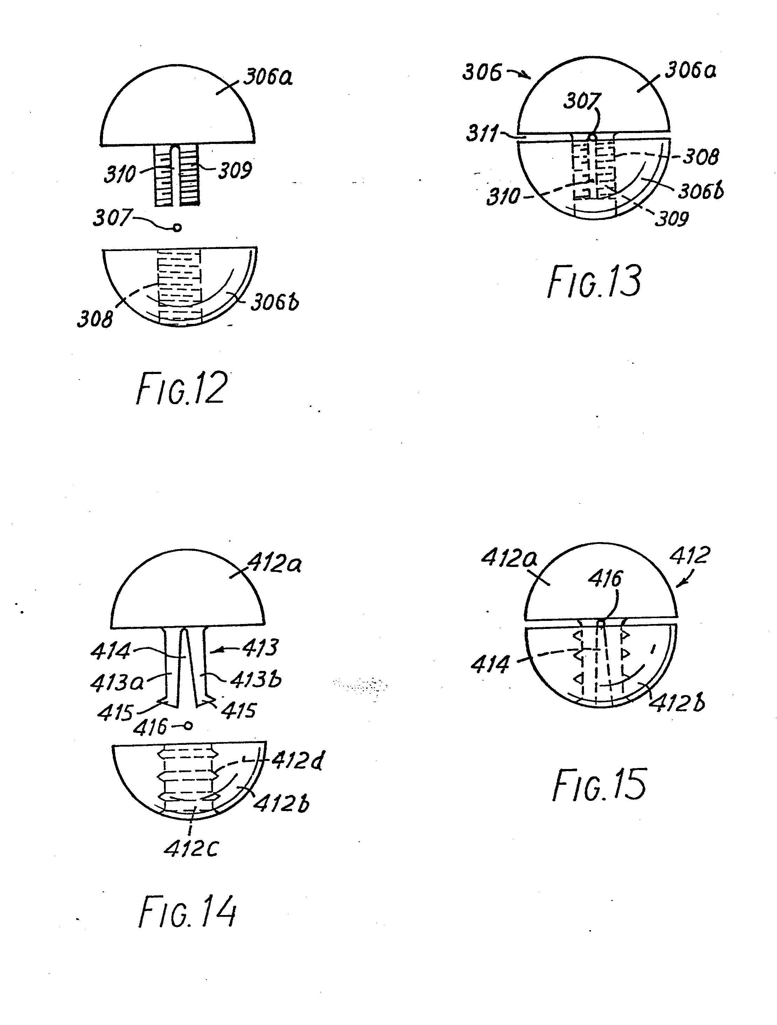

On the portion 227 there is provided a latching tenon 230 adapted to engage into the latching recess 231 of the portion 228. The latching tenon 230 comprises two legs 230a and 230b which project from a gripping surface 232. Between the legs 230a,230b there is defined a channel 233 extending up to the surface 232. The channel 233 may be parallel-sided or may taper slightly partly or wholly towards the surface 232. The overall width of the tenon 230 in its unconstrained condition is such as to make it a resilient tight fit into the recess 231. The fishing line 234 is introduced fully into the channel 233 and, according to the diameter of the line, may cause the legs 230a,230b to be forced slightly outwards, as seen in figure 10. Then the two portions 227 and 228 are closed together, as seen in figure 11, thereby trapping the line in the channel. The width of the channel 233 may be made so small that the line will be gripped solely between the two legs, and the depth of the recess 231 may be made less than the length of the legs 230a,230b such that the diametral faces of the two portions 227,228 do not meet nor grip the line individ--ually or jointly.

In figures 12 and 13 there is shown an embodiment of weight in which an approximately spherical or cylindrical body 306 comprises a first portion 306a and a second portion 306b which can be brought together for trapping the line 307. The body portion 306b has a threaded opening 308, and the body portion 306a has a threaded securing tenon 309 within which is formed a longitudinal slot 310 open at its outer end. For securing of the weight onto the line 307, the line is engaged into the slot 310 whereafter the body portion 306b is screwed onto the tenon 309 and tightened fully home. The line is then trapped in the seating formed by the closed end of the slot 310 and in the gap 311 defined in the body 306. The width of the slot 310 may be such that the line 307 must be forced into the slot, which action may slightly splay the legs of the tenon 309, and the engagement of the body portion 306b may result in springing towards each other of the legs of the tenon to grip the line. The depth of the opening 308 may be less than the length of the tenon 309, so that the line is gripped solely by the tenon and does not contact the diametral faces of the body portions.

In figures 14 and 15 the body 412 comprises a first portion 412a and a second portion 412b. In the portion 412b there is formed an opening 412c the bounding surface of which is formed with a series of parallel annular recesses 412d spaced along its length. The portion 412a is provided with a tenon 413 having two legs 413a,413b bounding between them a slot 414 which tapers from its outer end towards its inner end. At the outer end of each leg 413a,413b there is formed a tooth 415. The legs of the body portion 412a are made of resiliently deformable material, and in the unconstrained state the separation of the teeth 415,415 is greater than the width of the opening 412c, but the free end of each leg 413a413b is chamfered such that by the application of sufficient force manually, the legs can be forced into the opening 412c. The line 416 is placed within the slot 414, and then the two body portions 412a,412b are forced together in the manner described. As will be apparent from figure 15 the line will become fully trapped in the closed end of the slot and between the opposed faces of the body portions.

0190932

The two body portions are securely held in the closed condition by engagement of the teeth 415,415 into one or other of the recesses 412d, but by the application of sufficient force, e.g.  a knife blade inserted between the opposed surfaces of the body portions, they can be forced apart by springing the teeth 415,415 out of the recess and withdrawing the tenon 413 from the opening 412c. In a modification, the depth of the opening 412c is made less than the length of the tenon 413, so that the diametral faces of the body portions do not engage the line 416 which is gripped solely between the legs 413a,413b as a result of them being sprung towards each other.

Loaded plastics materials suitable for use in carrying out the invention are:

1. Bronze-loaded nylon marketed in the United Kingdom under the code B-MNY BZPL and having a density somewhat greater than 4;

2. Polypropylene loaded with barium sulphate marketed in the United Kingdom under the name BPC 7501 and having a density of the order of 2-3. This material has the advantage of being non-toxic.

CLAIMS

1. A fishing weight comprising two body parts (1,2;7,8; 101,102;227,228;306a,306b;412a,412b) made of resiliently deformable material, a first of said body parts including two gripper portions (3a,3b;9a,9b;104a,104b;230a,230b; 309,309;413a,413b) which define between them a channel (4;10;107;233;310;414) open at one end to receive a fishing line (6;12;111;234;317;416) therein, the second of said body parts having an opening (2a;8a;105;233;310; 414) of a shape and size enabling it to be forced over said two gripper portions with resilient deformation thereof to grip the line.

2. A fishing weight, as claimed in claim 1, wherein the channel, in the unconstrained condition of the two portions, is tapered away from its open end.

3. A fishing weight, as claimed in claim 1, wherein the channel, in the unconstrained condition of the two portions, is substantially parallel-sided.

4. A fishing weight, as claimed in any one of claims 1 to 3, wherein the width, or the maximum width, of the channel is less than the width of the line, such that forcing of the line into the channel causes spreading apart of the two gripper portions.

5. A fishing weight, as claimed in any one of claims 1 to 4, wherein the length of the channel is such that, when the weight is in position engaged onto the line, the line is substantially centrally situated in the weight.

0190932

6. A fishing weight, as claimed in any one of claims 1 to 5, wherein at least one of said gripper portions is chamfered adjacent its free end to facilitate entry of the line into the channel.

7. A fishing weight, as claimed in any one of claims 1 to 6, wherein the two gripper portions extend on said first body part to form a coupling means between the two body parts.

8. A fishing weight, as claimed in any one of claims 1 to 6, wherein the first body part is received in the opening of the second body part.

9. A fishing weight, as claimed in any one of claims 1 to 8, made of a plastics material loaded with a particulate material of greater weight per unit volume.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | GB-A- 878 323 (BARON) * Page 1, lines 54-89; figures 1-19 * | 1 | A 01 K 95/00 |
| A | US-A-2 770 909 (ILLGNER) * Column 1, lines 20-54; figure 2 * | 1 | |
| A | US-A-3 067 538 (HINES) | | |
| A | DE-C- 922 087 (ZWAAL) | | |
| A | US-A-3 180 051 (FREEMAN) | | |
| A | US-A-3 195 262 (METZLER) | | TECHNICAL FIELDS SEARCHED (Int Cl.4) A 01 K |

The present search report has been drawn up for all claims

| Place of search | Date of completion of the search | Examiner |
|---|---|---|
| THE HAGUE | 17-03-1986 | VERDOODT S.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82